# EUROPEAN PATENT SPECIFICATION

(11) **EP 2 301 672 B1**
(45) Date of publication and mention of the grant of the patent: **04.12.2013**
(21) Application number: 10176838.0
(22) Date of filing: 15.09.2010
(51) Int. Cl.: B05B 1/30, F16K 1/22, F16K 27/02

(54) **Adjustable water flow rate limiting device for water delivery systems**
Einschränkungsvorrichtung für eine einstellbare Wasserdurchflussrate für Wasserbereitstellungssysteme
Dispositif réglable de limitation du débit d'eau pour systèmes de distribution d'eau

(30) Priority: 16.09.2009 IT MI20090290 U
(43) Date of publication of application: 30.03.2011
(73) Proprietor: P.G.I. Parigi Group International S.p.A., 20052 Monza (MB) (IT)
(72) Inventor: Parigi, Cesare, I-20052, Monza (MB) (IT)
(74) Representative: Cicogna, Franco

(56) References cited:
- GB-A- 2 276 666
- US-A- 5 370 148
- US-A1- 2002 074 040

## Description

### BACKGROUND OF THE INVENTION

The present invention relates to an adjustable water flow rate limiting device for water delivery systems.

As is known, natural water reserves are increasingly depleted and drinking water is a valuable good which should not be wasted.

An easily water availability in a domestic environment has caused a low consideration on water saving problems even due to modern delivery systems, such as quickly operating water cocks delivery large water amounts even if it would not be necessary.

Actually, an huge amount of water is wasted as a water cock or faucet is opened, for example for washing or kitchen applications, such amount being much larger than those which would be strictly necessary for an intended application.

To reduce a water consume, furthermore, is very difficult considering the fact that, an average consumer, would not know what amount of water would be delivered in few seconds by a fully open faucet, and this mainly due to the fact that the water system provides a water flow rate, the so-called water pressure, of a comparatively high value.

The document US 5370148 discloses substantially the preamble of claim 1.

### SUMMARY OF THE INVENTION

Accordingly, the aim of the present invention is to provide such a water consume limiting device adapted to reduce an excessive water consume.

Within the scope of the above mentioned aim, a main object of the invention is to provide such a water flow-rate or consume limiting device which is constructionally very simple and inexpensive.

Another object of the invention is to provide such an operatively flexible water flow rate or consume limiting or reducing device which may be easily and quickly applied to any desired water delivery apparatus such as a water basin, sink, shower and so on.

Another object of the present invention is to provide such a water flow-rate limiting device construction which, owing to its specifically designed structural features, is very reliable and safe in operation.

Yet another object of the present invention is to provide such a water flow-rate limiting device which may be easily made starting from easily commercially available elements and materials and which, moreover, is very competitive from a mere economic standpoint.

According to one aspect of the present invention, the above mentioned aim and objects, as well as yet other objects, which will become more apparent hereinafter, are achieved by an adjustable water flow-rate limiting device for water delivery systems, according to claim 1.

Said shut-off body comprises a blade or vane made rigid or integral with the control element which is constituted by an outer body and an inner body, said inner body being at least partially engaged in a recess of said blade, said control element being fixed to said blade through a fixing screw engaged in a throughgoing seat passing through said outer body and inner body.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

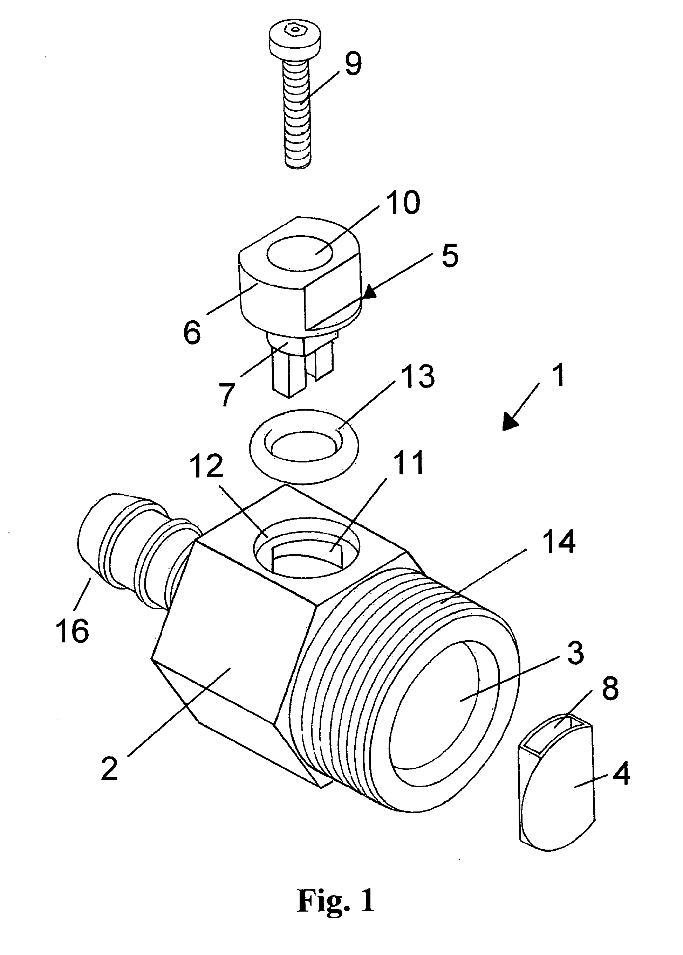

Figure 1 is an exploded perspective view of the adjustable water flow-rate limiting device according to the present invention;
Figure 2 is a broken-away perspective view of the inventive device shown in a closed condition thereof;
Figure 3 is a view similar to figure 2, but showing the inventive device in an open position thereof;
Figure 4 is a top plan view of the adjustable water flow-rate limiting device according to the present invention;

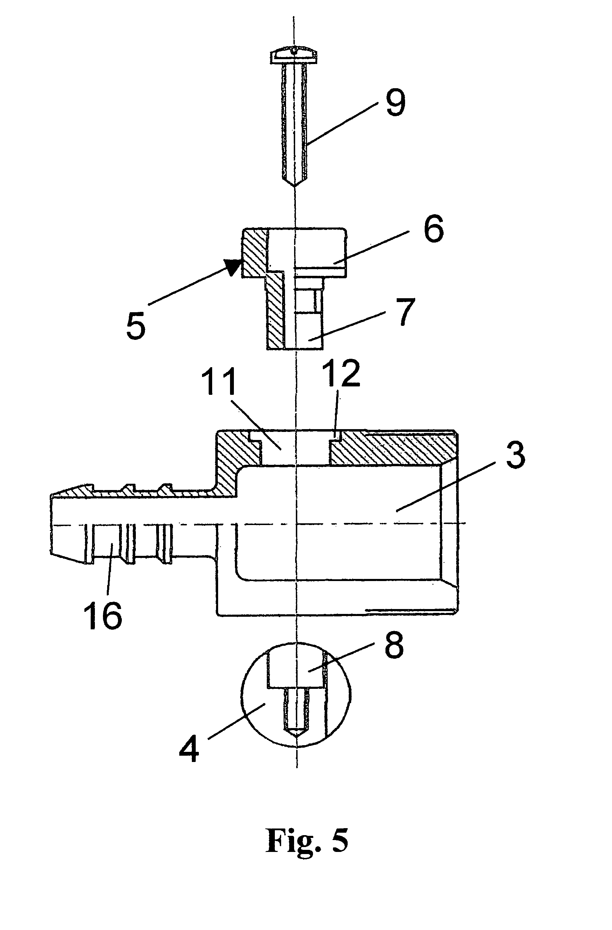

Figure 5 is a partially cross-sectioned and exploded side elevation view of the device according to the present invention;

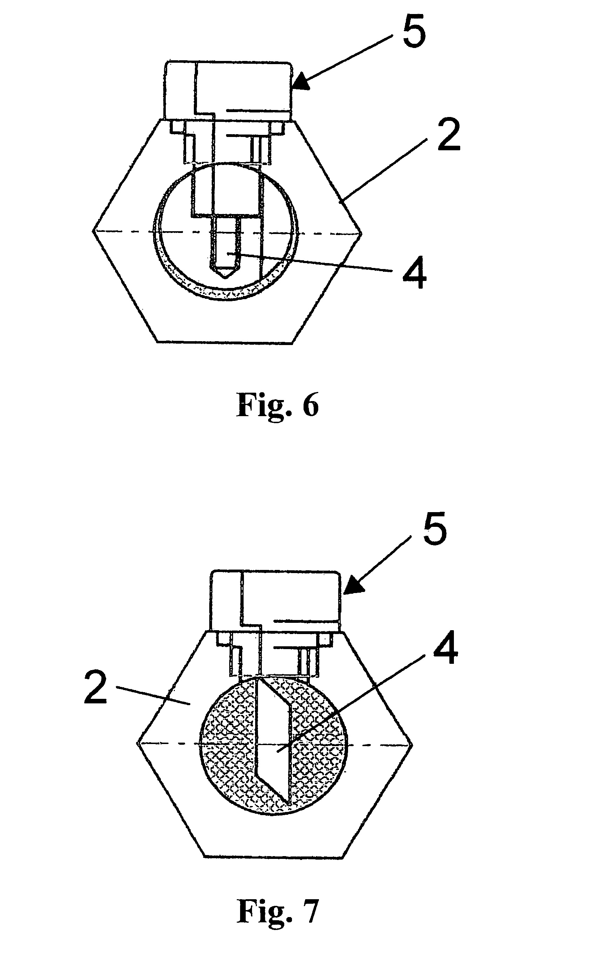

Figure 6 is a further partially cross-sectioned front elevation view showing the device according to the invention in a closed condition thereof;
Figure 7 is a view similar to figure 6, but showing the inventive device in an open position thereof ;

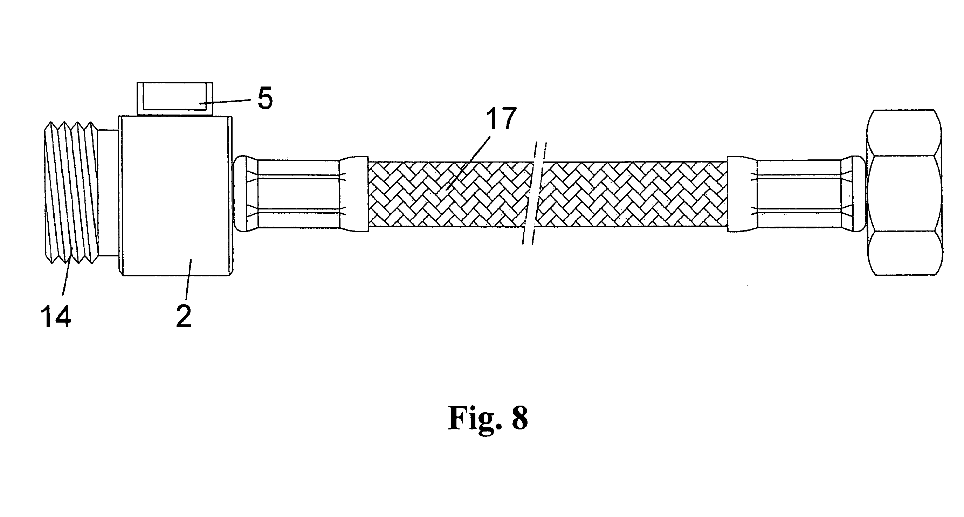

Figure 8 shows the inventive device applied to a water system delivery flexible hose; and

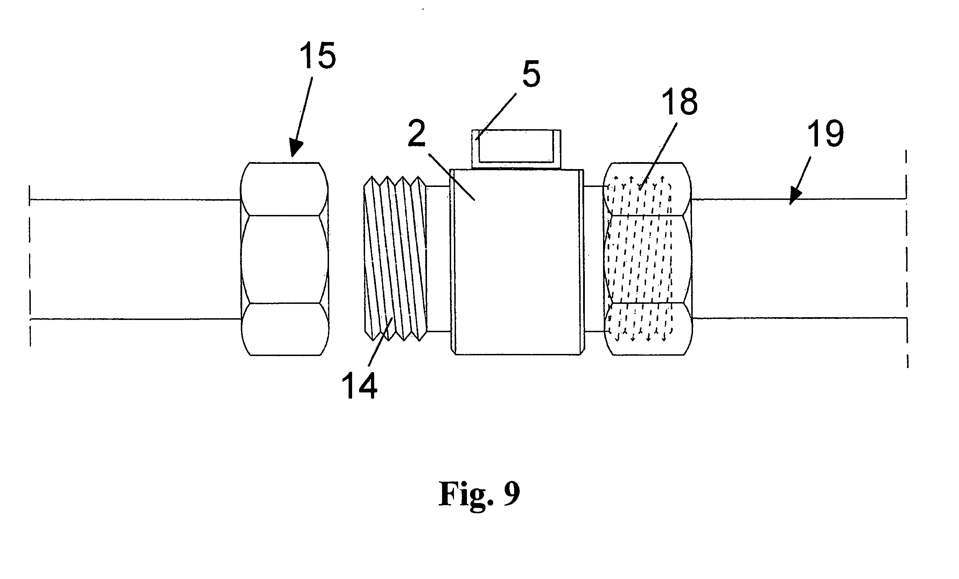

Figure 9 shows the inventive device applied to an adapter including a double thread.

### DESCRIPTION OF THE PREFERRED EMBODIMENTS

With reference to the number references of the above mentioned figures, the adjustable water flow limiting device according to the present invention, which has been generally indicated by the reference number 1, comprises a holding or housing body 2, defining a passage chamber 3 in which a water shut-off body consisting of a blade 4 is arranged.

The blade or vane 4 is made rigid or integral with a control or driving element 5 comprising an outer body 6 and an inner body 7.

The inner body 7 is at least partially engaged in a seat or recess 8 of said blade.

The control element 5 is clamped to the blade 4 through a clamping screw 9 engaged in a throughgoing seat 10 passing through the outer body and inner body 7.

Said outer body 6 is arranged outside said holding or housing body 2 whereas said inner body 7 extends through a throughgoing hole 11 of the holding body 2 and the recess or seat 8 of said blade 4.

The throughgoing hole 11 of the holding body 2 comprises an annular recess 12 therein an O-ring gasket 13 is housed, for providing a sealed connection between the control body 5 and holding body 2.

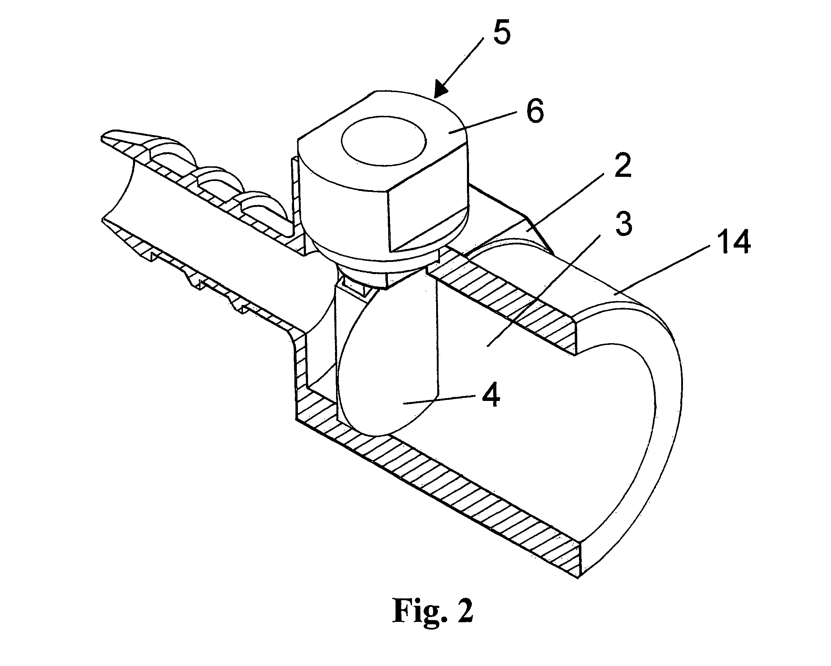

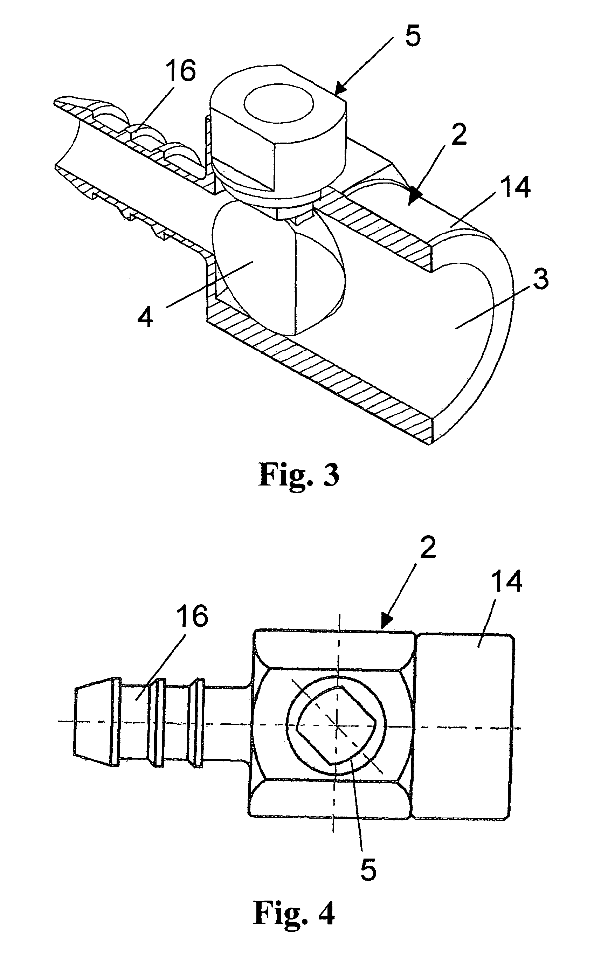

The outer body 6 comprises a double facet pattern to be engaged by an operating tool, such as a standard torque wrench, or a specifically designed driving handle, allowing the outer body 6 and blade 4 to be turned for arranging said blade at a position between the fully open one, shown in figure 3, in which the blade is arranged substantially parallel to the water flow direction, and a fully closed position, shown in figure 2, thereat said blade is cross-arranged with respect to the water flow direction, thereby substantially completely shutting off the passage chamber 3.

As shown, said holding body 2 comprises, at an end portion thereof, a thread 14 for allowing said holding body 2 to be removable coupled to a fitting 15 or other water delivery system element, and, at the other end portion thereof, including a shank 16 allowing said holding body to be coupled to a flexible hose 17 or other pipe element.

Instead of said shank 16, said holding body 2 could also comprise a second thread 18 for coupling it to another fitting element 19.

The adjustable flow-rate limiting device, according to the present invention, may be advantageously used for shutting-off the water flow to any desired water delivery apparatus.

After assembling, the inventive water flow-rate limiting device will allow to easily and quickly adjust the maximum water-flow by simply rotating, by a wrench or a handle, the control element 5.

If the water system flow-rate changes, the device may be easily and quickly adjusted, so as to recover the used water flow-rate.

It has been found that the invention fully achieves the intended aim and objects.

In fact, the invention has provided a device which allow a user to quickly and easily adjust and limit the water flow-rate.

In practicing the invention, the used materials, as well as the contingent size and shapes, can be any, depending on requirements.

## Claims

1. An adjustable water flow-rate limiting device (1) for water delivery systems, said device comprising a holding body (2), defining a passage chamber (3) including a shut-off body (4) rigid with a control element (5) projecting from said holding body (2), said control element (5) being operable to change the position of the shut-off body (4) in said passage chamber (3) for adjusting the water amount passing through said chamber (3), said shut-off body (4) comprising a blade element, which is made rigid with the control element (5) constituted by an outer body (6) and an inner body (7), said inner body (7) being at least partially engaged in a seat (8) of said blade, **characterized in that** said control element (5) is clamped to said blade by a clamping screw (9) engaged in a throughgoing seat (10) passing through said outer body (6) and inner body (7).

2. A water flow-rate limiting device, according to claim 1, **characterized in that** said outer body (6) is arranged outside of said holding body (2), whilst said inner body (7)extends through a throughgoing hole (11) of said holding body (2) and the seat (8) in said blade (4), said throughgoing hole (11) of said holding body (2) comprising an annular recess (12) in which an O-ring gasket (13) for sealing said control body (5) and containing body is arranged.

3. A water flow-rate limiting device, according to one or more of the preceding claims, **characterized in that** said outer body (6) comprises a double facet pattern to be engaged by a driving tool such as a standard wrench or dedicate handle, allowing said outer body (6) and blade to be rotatively driven to arrange said blade at a position between a fully open position, thereat said blade is substantially parallel to the water flow direction, and a fully closed position, thereat said blade is arranged crosswise the water flow thereby substantially fully shutting off the passage chamber (7).

4. A water flow-rate limiting device, according to one or more of the preceding claims, **characterized in that** said holding body (2) comprises, at an end portion thereof, a thread (14) for coupling said holding body (2) to a fitting (15) or other water delivery system element, and, at the other end portion thereof, having a shank (16) allowing said holding body (2) to be coupled to a flexible hose (17) or other pipe element.

5. A water flow-rate limiting device, according to one or more of the preceding claims, **characterized in that** said holding body (2) comprises, instead of said shank (16), a second thread (18) for coupling said holding body to a further fitting element (19).

## Patentansprüche

1. Einstellbare Wasserdurchflussratenbegrenzungsvorrichtung (1) für Wasserbereitstellungssysteme, wobei die Vorrichtung umfasst: einen Aufnahmekörper (2), der eine Durchgangskammer (3) definiert, die einen Absperrkörper (4) umfasst, der starr mit einem Bedienelement (5) ausgebildet ist, das von dem Aufnahmekörper (2) vorsteht, wobei das Bedienelement (5) betätigbar ist, um die Stellung des Absperrkörpers (4) in der Durchgangskammer (3) zum Einstellen der durch die Kammer (3) tretenden Wassermenge zu ändern, wobei der Absperrkörper (4) ein Blattelement umfasst, welches mit dem Bedienelement (5), das durch einen äußeren Körper (6) und einen inneren Körper (7) gebildet wird, starr gemacht ist, wobei der innere Körper (7) mindestens teilweise in einem Sitz (8) des Blattes in Eingriff steht, **dadurch gekennzeichnet, dass** das Bedienelement (5) mittels einer Klemmschraube (9) an das Blatt geklemmt ist, welche in einem Durchgangssitz (10), der durch den äußeren Körper (6) und den inneren Körper (7) hindurchverläuft, in Eingriff steht.

2. Wasserdurchflussratenbegrenzungsvorrichtung nach Anspruch 1, **dadurch gekennzeichnet, dass** der äußere Körper (6) außerhalb des Aufnahmekörpers (2) angeordnet ist, während sich der innere Körper (7) durch ein Durchgangsloch (11) des Aufnahmekörpers (2) und den Sitz (8) in dem Blatt (4) erstreckt, wobei das Durchgangsloch (11) des Aufnahmekörpers (2) eine ringförmige Aussparung (12) umfasst, in welcher eine 0-Ring-Dichtung (13) zum Abdichten des Bedienelements (5) und des Aufnahmekörpers angeordnet ist.

3. Wasserdurchflussratenbegrenzungsvorrichtung nach einem oder mehreren der vorhergehenden Ansprüche, **dadurch gekennzeichnet, dass** der äußere Körper (6) ein Doppelfacettenmuster umfasst, mit dem ein Treibwerkzeug, beispielsweise ein Standardschraubenschlüssel oder ein zugehöriger Griff, in Eingriff zu bringen ist, was ermöglicht, den äußeren Körper (6) und das Blatt drehbar anzutreiben, um das Blatt an einer Stellung zwischen einer ganz geöffneten Stellung, in welcher das Blatt zu der Wasserdurchflussrichtung im Wesentlichen parallel ist, und einer ganz geschlossenen Stellung, in welcher das Blatt quer zu dem Wasserdurchfluss angeordnet ist und dadurch die Durchgangskammer (7) im Wesentlichen vollständig absperrt, anzuordnen.

4. Wasserdurchflussratenbegrenzungsvorrichtung nach einem oder mehreren der vorhergehenden Ansprüche, **dadurch gekennzeichnet, dass** der Aufnahmekörper (2) an einem Endabschnitt davon ein Gewinde (14) zum Verbinden des Aufnahmekörpers (2) mit einem Fitting (15) oder einem anderen Wasserbereitstellungssystemelement umfasst und an dem anderen Endabschnitt davon einen Schaft (16) aufweist, der ermöglicht, den Aufnahmekörper (2) mit einem flexiblen Schlauch (17) oder einem anderen Rohrelement zu verbinden.

5. Wasserdurchflussratenbegrenzungsvorrichtung nach einem oder mehreren der vorhergehenden Ansprüche, **dadurch gekennzeichnet, dass** der Aufnahmekörper (2) an Stelle des Schafts (16) ein zweites Gewinde (18) zum Verbinden des Aufnahmekörpers mit einem weiteren Fittingelement (19) umfasst.

## Revendications

1. Dispositif réglable de limitation de débit d'eau (1) pour des systèmes de distribution d'eau, ledit dispositif comprenant un corps de retenue (2) définissant une chambre de passage (3) comportant un corps obturateur (4) solidaire d'un élément de commande (5) faisant saillie depuis ledit corps de retenue (2), ledit élément de commande (5) pouvant fonctionner pour changer la position du corps obturateur (4) dans ladite chambre de passage (3) afin de régler la quantité d'eau qui traverse ladite chambre (3), ledit corps obturateur (4) comprenant un élément formant lame, qui est prévu solidaire avec l'élément de commande (5) constitué d'un corps extérieur (6) et d'un corps intérieur (7), ledit corps intérieur (7) étant au moins partiellement engagé dans un siège (8) de ladite lame, **caractérisé en ce que** ledit élément de commande (5) est fixé sur ladite lame grâce à une vis de blocage (9) engagée dans un siège traversant (10) qui traverse ledit corps extérieur (6) et ledit corps intérieur (7).

2. Dispositif de limitation de débit d'eau, selon la revendication 1, **caractérisé en ce que** ledit corps extérieur (6) est agencé à l'extérieur dudit corps de retenue (2), alors que ledit corps intérieur (7) s'étend à travers un trou traversant (11) dudit corps de retenue (2) et le siège (8) dans ladite lame (4), ledit trou traversant (11) dudit corps de retenue (2) comprenant un évidement annulaire (12) dans lequel est agencé un joint torique (13) assurant l'étanchéité dudit corps de commande (5) et du corps de rétention.

3. Dispositif de limitation de débit d'eau, selon l'une ou plusieurs des revendications précédentes, **caractérisé en ce que** ledit corps extérieur (6) comprend un motif à double facette destiné à recevoir en engagement un outil d'entrainement tel qu'une clé standard ou une poignée dédiée, permettant ainsi au dit corps extérieur (6) et à ladite lame d'être entrainés en rotation pour disposer ladite lame dans une position située entre une position totalement ouverte, dans laquelle ladite lame est sensiblement parallèle à la direction de l'écoulement de l'eau, et une position totalement fermée dans laquelle ladite lame est agencée en travers de l'écoulement de l'eau, ce qui lui permet d'obstruer sensiblement totalement la chambre de passage (7).

4. Dispositif de limitation de débit d'eau, selon l'une ou plusieurs des revendications précédentes, **caractérisé en ce que** ledit corps de retenue (2) comprend, sur une portion d'extrémité, un filetage (14) permettant de coupler ledit corps de retenue (2) à un accessoire de fixation (15) ou à tout autre élément d'un système d'alimentation et, à l'autre portion d'extrémité, possède une tige (16) permettant de coupler ledit corps de retenue (2) avec un tuyau flexible (17) ou tout autre élément de tuyau.

5. Dispositif de limitation de débit d'eau, selon l'une ou plusieurs des revendications précédentes, **caractérisé en ce que** ledit corps de retenue (2) comprend, au lieu de ladite tige (16), un second filetage (18) pour coupler ledit corps de retenue à un autre élément de fixation (19).
